# EUROPÄISCHE PATENTSCHRIFT

(11) **EP 0 683 891 B1**
(45) Veröffentlichungstag und Bekanntmachung des Hinweises auf die Patenterteilung: **15.04.1998**
(21) Anmeldenummer: 94907558.4
(22) Anmeldetag: 12.02.1994
(51) Int. Cl.: G01F 11/02, B01L 3/02, B01L 11/00

(54) **VORRICHTUNG ZUR PORTIONIERTEN ENTNAHME VON FLÜSSIGKEIT**
LIQUID PORTIONING DEVICE
DISPOSITIF DE PRELEVEMENT DE PORTIONS DE LIQUIDE

(30) Priorität: 13.02.1993 DE 4304387
(43) Veröffentlichungstag der Anmeldung: 29.11.1995
(73) Patentinhaber: von Schuckmann, Alfred, 47627 Kevelaer (DE)
(72) Erfinder: VON SCHUCKMANN, Alfred, D-47627 Kevelaer (DE); LUDEWIGS, Werner, D-26725 Emden (DE)
(74) Vertreter: Rieder, Hans-Joachim, Dr.
(86) Internationale Anmeldenummer: EP9400405
(87) Internationale Veröffentlichungsnummer: WO9418526

(56) Entgegenhaltungen:
- DE-B- 1 170 813
- FR-A- 2 556 091
- GB-A- 2 001 127

## Beschreibung

Die Erfindung bezieht sich auf eine Vorrichtung zur portionierten Entnahme von Flüssigkeit aus der Öffnung eines Behälters durch Einsaugen der Flüssigkeit mittels eines Kolbens in einen Portionierungsraum einer Ausgabeeinheit (Flüssigkeitsportionierer), aus welchem die Flüssigkeit durch entgegengesetzte Vorverlagerung des Kolbens mittels einer Betätigungshandhabe durch ein Entleerungs-Mundstück ausdrückbar ist, wobei die Vorrichtung weiter ein in die Öffnung des Behälters eingesetztes, bis unterhalb des Behälter-Flüssigkeitsspiegels reichendes Zwischenstück aufweist, das eine Tasche bildet, in welche der von einem Innentopf der Ausgabeeinheit gebildete Portionierungsraum einsenkbar ist, und welches Zwischenstück eine Steuerstufe aufweist, an der bei Einsenken der Ausgabeeinheit in die Tasche der bei entleertem Portionierungsraum maximal vorstehende Kolben durch Gegenhalt widerlagerartig gehalten ist, so daß der Portionierungsraum den Kolben unter Verlagerung in die Füllposition überläuft.

Eine Vorrichtung dieser Art ist durch die DE,B,11 70 813 bekannt. Dort geht ein röhrchenartiger, endgeschlossener Fortsatz vom Zwischenstück aus. Der eine exponierte Lage einnehmende Fortsatz fährt bei Zuordnen der Vorrichtung in die Tasche über eine bodenseitige Öffnung in den Portionierungsraum ein. Das dem Kolben zugewandte Ende des Fortsatzes drückt dabei,als Steuerstufe fungierend, den Kolben in dem Zylinder zurück. Hierdurch entsteht im Flüssigkeitsportionierer Unterdruck. Er füllt sich. Wird der Flüssigkeitsportionierer vom röhrchenförmigen Fortsatz abgezogen, steht die Öffnung offen. Es kann zu Verlust an Inhalt kommen. Das ist aber einer exakten Dosierung abträglich.

In Kenntnis dieser Vorgabe hat sich die vorliegende Erfindung die Aufgabe gestellt, einen Flüssigkeitsdosierer baulich einfach und gebrauchsvorteilhaft auszubilden.

Gelöst ist diese Aufgabe durch die im Anspruch 1 angegebene Erfindung.

Die daran anschließenden Ansprüche sind vorteilhafte Weiterbildungen des gattungsgemäßen Flüssigkeitsportionierers.

Zufolge solcher Ausgestaltung ist ein gebrauchsvorteilhafter Flüssigkeitsportionierer erzielt. Er besitzt die als vorteilhaft empfundene Ortsveränderbarkeit gegenüber dem die zu portinierende Flüssigkeit enthaltenden Behälter, ermöglicht aber das jederzeitige geordnete, also unverlierbare Zuordnen des Portionierers, dies aber unter Erfüllung einer äußerst handhabungsgünstigen Funktion, nämlich der des Ladens. Die Ausgabeeinheit besitzt nämlich nach Entleeren ein in dieser Richtung bestens nutzbares Merkmal, und zwar das des Ausfahrens des Entleerungsmundstücks. Erreicht ist das dadurch, daß das Mundstück mit dem Kolben verbunden ist und die Mundstück-Mündung gegen die Steuerstufe fährt, welche sich am unteren Ende der Tasche befindet. Jede ordnungsgemäße Zurückführung der Ausgabeeinheit, also des Flüssigkeitsportionierers, bewirkt automatisch das Füllen des Portionierungsraumes. Das entsprechende Saug-Befüllen ist von Fremdluft frei, wenn die eingesetzte Ausgabeeinheit mit der Mantelwand des Zwischenstückes in Dichtanlage tritt, wobei es zugleich von Vorteil ist, daß das Mundstück mit einer Ringschulter dichtend gegen die Steuerstufe tritt. So läßt sich über das den Flüssigkeitsspiegel untergreifende Zwischenstück, beispielsweise über ein Steigrohr, die Flüssigkeit restfrei aus dem Behälter herausziehen.

Weiter bringt die Erfindung in Vorschlag, daß die Ausgabeeinheit mit einem Außentopf einen Endkragen des Zwischenstücks übergreift. Der Endkragen kann als Schraubkappe ausgebildet sein, dies in Integration mit dem Zwischenstück. Dabei bietet sich eine vorteilhafte Weiterbildung an, indem ein verrastender Übergriff zwischen Endkragen und Außentopf vorliegt. Eine solche Topfform kann auch weiterbildend so genutzt werden, daß das Verrastungsmittel zu einem Originalitätsstreifen weitergebildet ist, dies einfach durch topfranduntergreifende Ausformung. Weiter bringt die Erfindung in Vorschlag, daß der koaxial unter der Mundstücköffnung liegenden Mündung des Ansaugkanales des Zwischenstückes ein Klappventil zugeordnet ist. Dieses öffnet mit Eintritt des Saughubs und fällt dann wieder in die produktschützende Schließlage, dies so, daß ein etwaiger Rest noch über das Steigrohr wieder in den Vorrat zurücklaufen kann. Weiter wird so vorgegangen, daß der am Ende des rohrförmigen Mundstükkes materialeinheitlich angeformte Kolben mit der Betätigungshandhabe verklipst ist. Das hat bauliche und montagetechnische Vorteile. Die Betätigungshandhabe führt sich mit einem Ringkragen zugleich verbindungsgesichert an der Innenwand des Innentopfes der Ausgabeeinheit. Das Befüllen des Portionsraumes ergibt sich funktionssicher durch eine im Bereich des Kolbens angeordnete Überströmöffnung zwischen dem vom Innentopf gebildeten Zylinderraum und dem Inneren des Mundstückrohres. So wird die Flüssigkeit über einen relativ geringen Querschnitt eingezogen und braucht nicht gegen eine überlagernde Flüssigkeitsmenge eingedrückt zu werden. Das bringt eine leichte Handhabung. Außerdem ist eine vorteilhafte Ausgestaltung erreicht durch eine über die Höhenverstellung der Betätigungshandhabe ablesbare Füllstandsanzeige. Die Skala kann dabei von einer entsprechenden gegenläufigen Topfvergrößerung des Außentopfes gebildet sein unter Belassung einer Schlitzführung für einen Zeiger. Um den Kolben selbst vor weitergehenden mechanischen Belastungen zu schützen, wird vorgeschlagen, daß unterhalb des Kolbens Hubbegrenzungsanschläge vorgesehen sind, welche dem Kolben voreilend, auf einen Querboden des Portionierungsraumes aufsetzen. Dadurch wird die üblicherweise vorgesehene Führungs-/Dichtlippe des Kolbens der anschlagbildenden Funktion entzogen, also geschont. Ein solcher Querboden kann dem Innentopf materialeinheitlich angeformt sein; bevorzugt wird jedoch eine Ausgestaltung dahingehend, daß der Querboden als auf den unteren Rand des Innentopfes aufgeklipstes Teil gestaltet ist. Da ein solches Teil praktisch Stopfenfunktion hat, kann das für diesen Zweck geeignetste Material eingesetzt werden. Alternativ zur mundstückseitigen Anformung des Kolbens besteht eine vor allem montagevorteilhafte Lösung darin, daß der Kolben am dem Portionierungsraum zugewandten Ende einer Ringwand der Betätigungshandhabe sitzt. Hier wird die von Hause aus gegebene verkippungsfreie Verlagerung der Betätigungshandhabe unmittelbar auf den Kolben übertragen. Eine vorteilhafte Weiterbildung ergibt sich sodann dadurch, daß in den Innenbereich des freien Ringrandes der Ringwand der Einsaugkanal bzw. das Mudnstück als Rohrteil eingeklipst ist. Der Kolben erhält dadurch eine Doppelwandigkeit, welche aussteifend wirkt, also dem relativ elastischen Kolben innere Stabilität verleiht. In Fällen, in denen die Öffnung des Behälters quer schnittsmäßig zur teilweisen oder völligen Unterbringung des Portionierungsraumes darin nicht ausreicht, besteht eine vorteilhafte Ausgestaltung dadurch, daß das Zwischenstück zur Erzielung einer den Behälterrand überragenden Positionierung eine Ringwand besitzt, die an einem reiterförmig auf dem Behälterhals sitzenden Fußteil angeordnet ist. Das entspricht praktisch einer nach auswärts gehenden Verlängerung der Innenwand des Zwischenstücks. Um die ganze Vorrichtung in vormontiertem Zustand dem Behälter zuordnen zu können, wird noch vorgeschlagen, daß Außentopf und Endkragen in eine ratschenförmige Mitnahmeeingriffsstellung zueinander schiebbar sind. Mit Zuordnung des Außentopfes ist so ein Durchgriff für die schraubtechnische Zuordnung des Zwischenteils erreicht. Durch die ratschenförmige Ausbildung wird der entsprechende Mitnahmeeingriff im Drehsinn entgegen der Zuschraubrichtung unwirksam. Das erbringt praktisch eine Kindersicherung.

Der Gegenstand der Erfindung ist nachstehend anhand eines zeichnerisch veranschaulichten Ausführungsbeispieles näher erläutert. Es zeigt:
- Figur 1: den erfindungsgemäß ausgebildeten Flüssigkeitsportionierer (Ausgabeeinheit), dem Zwischenstück eines Behälters zugeordnet, als originale Verkaufseinheit, und zwar im Vertikalschnitt,
- Figur 2: den Flüssigkeitsportionierer vom Behälter gelöst, in Ausgabe der dosierten Flüssigkeit begriffen,
- Figur 3: einen der Figur 1 entsprechenden Schnitt bei Wiederzuordnen und Füllen des Flüssigkeitsportionierers,
- Figur 4: den Flüssigkeitsportionierer im vertikalen Teilschnitt unter Verdeutlichung einer Füllstandsanzeige,
- Figur 5: dasselbe in Perspektive,
- Figur 6: einen der Figur 1 entsprechenden Vertikalschnitt in Darstellung weiterbildender Details bezüglich des Kolbens, der Querwand und des Außentopfes,
- Figur 7: den Schnitt gemäß Linie VII-VII in Figur 6,

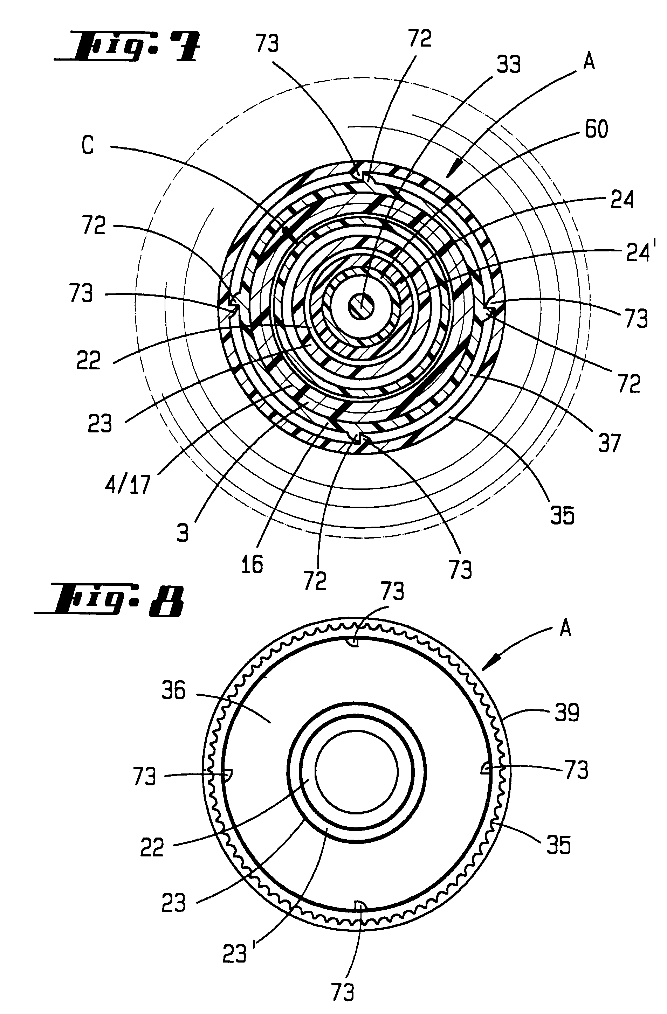

- Figur 8: eine Unteransicht des Außentopfes in isolierter Wiedergabe,
- Figur 9: einen Vertikalschnitt durch diesen Außentopf,

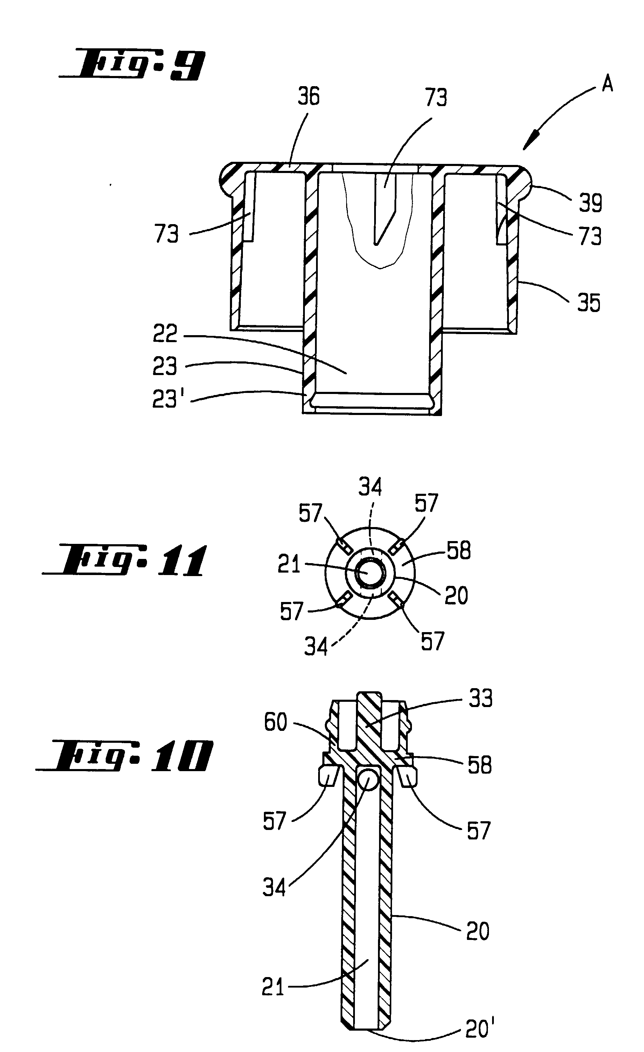

- Figur 10: das als Entnahmehülse fungierende Mundstück im Vertikalschnitt, und zwar in Einzeldarstellung,
- Figur 11: die Unteransicht hierzu,
- Figur 12: eine der Figur 1 entsprechende Darstellung der zu Figur 6 genannte Details und weiterbildende Maßnahmen enthaltenden Vorrichtung, eine außerhälsige Zuordnung des Portionierungsraumes verkörpernd,
- Fig. 13: den zugehörigen Außentopf in Seitenansicht,
- Figur 14: einen Vertikalschnitt durch den Außentopf,

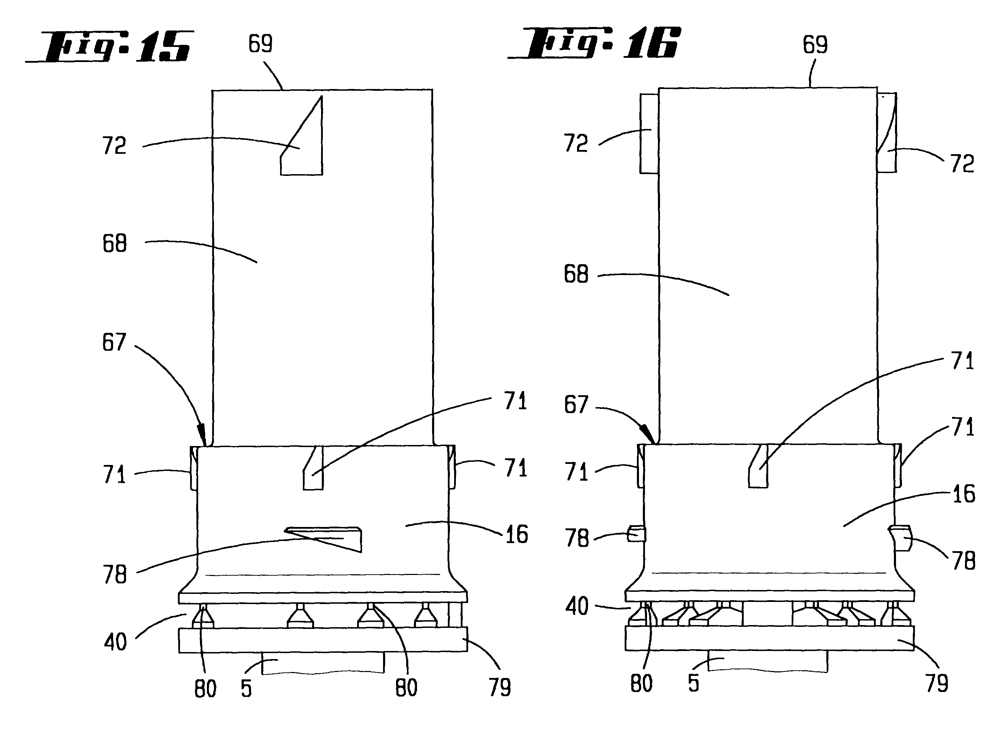

- Figur 15: das um die Ringwand erweiterte Zwischenstück in Seitenansicht und
- Figur 16: eine um 90° verdrehte Seitenansicht des Zwischenstücks.

Die als Flüssigkeitsportionierer A gestaltete Ausgabeeinheit läßt sich einer obenliegenden Öffnung 1 eines die auszugebende Flüssigkeit 2 enthaltenden Behälters B lösbar zuordnen. Letzterer ist als Flasche ausgebildet. Diese geht oben in einen die Öffnung 1 formenden Hals 3 über.

Der mantelwandseitig ein Außengewinde 4 tragende Hals 3 nimmt in seinem zylindrischen Inneren ein Zwischenstück C auf. Dieses ist dichtend eingesetzt und bildet eine im wesentlichen zylindrische Innenwand 5. Letztere formt eine bodenseitig sich verjüngende, rotationssymmetrisch gestaltete Tasche 6.

Die Innenwand 5 geht in Richtung des nicht dargestellten Bodens des Behälters B in eine Steuerstufe 7 über. Die liegt am unteren Ende der Tasche 6, genauer im querschnittskleineren Bereich einer trichterförmigen Verjüngung 8 der Innenwand 5 des Zwischenstücks C.

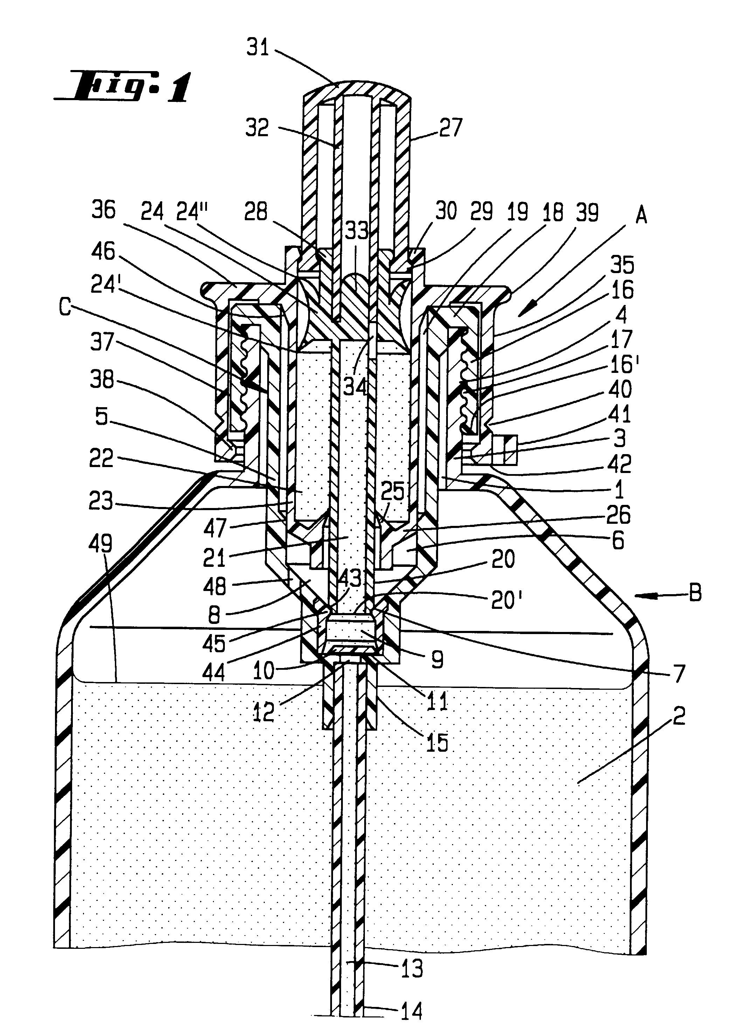

Unterhalb der Steuerstufe 7 befindet sich in einem Innenwand-Fortsatz eine Ventilkammer 9. Letztere enthält ein Ventil in Form eines Rückschlagventils, in Figur 1 realisiert als Klappventil 10, in den beiden anderen Lösungen als Kugelventil 10'. Das Klappventil 10 respektive Kugelventil 10' hebt bei in Richtung des Pfeiles x gehendem Saughub des Flüssigkeitsportionierers A von seiner korrespondierenden Ventilsitzfläche 11 ab. Die Kugel des Kugelventils ist durch rippenförmig, montageüberwindbare Haltevorsprung in der Ventilkammer 9 gefangen.

Über eine Ventilöffnung 12 steht besagte Ventilkammer 9 mit dem Inneren 13 eines Steigrohres 14 strömungstechnisch in Verbindung. Ein solches Steigrohr 14 reicht im wesentlichen vertikal verlaufend bis kurz vor die Innenfläche des nicht dargestellten Bodens des Behälters B.

Das Steigrohr 14 befindet sich ventilkammerseitig in Steckverbindung zu einem der Ventilkammer 9 nachgeschalteten Verbindungsstutzen 15.

Der Ventilkammer 9 abgewandt geht das Zwischenstück C in einen Endkragen 16 über. Der formt eine Schraubkappe. Letztere besitzt das zu dem erwähnten Außengewinde 4 passende Innengewinde 17. Die Mantelwand des außenseitig über den Hals 3 zurückgeschlagenen Endkragens 16 ist zylindrisch. Innenwand 5, Endkragen 16 und eine sie im Kappendeckenbereich verbindende Ringbrücke 18 bilden einen U-förmigen schraubbegrenzenden Gewindeschacht. Die obere Öffnung der Tasche 6 ist mit 19 bezeichnet.

Der Flüssigkeitsportionierer A ist befüllfähig andockbar. Ein Abschnitt desselben läßt sich dazu in die Tasche 6 einsenken. Bestandteil dieses Abschnitts des Flüssigkeitsportionierers A, sprich Ausgabeeinheit, ist ein Mundstück 20. Das hat einen zentralen Einsaugkanal 21. Letzterer steht strömungstechnisch in Verbindung mit einem Portionierungsraum 22 zur Aufnahme der über das Steigrohr 14 eingesaugten Flüssigkeit 2. Gebildet ist der Portionierungsraum 22 von einem Innentopf 23 des Flüssigkeitsportionierers A.

Der Innentopf 23 fungiert als Zylinder einer Kolben/Zylin der-Einheit. Deren Kolben trägt das Bezugszeichen 24. Letzterer sitzt am der Mündung 20' des Mundstücks 20 abgewandten oberen Ende des praktisch als hohle Kolbenstange gestalteten Mundstücks 20. Mundstück 20 und Kolben 24 sind integral geformt.

Der Kolben 24 geht randseitig in Führungs-/Dichtlippen 24', 24'' über. Die sind gebildet durch umlaufendes konkaves Einsenken der Mantelwand des Kolbens 24.

Den unteren dichtenden Abschluß des Zylinder- bzw. Portionierungsraumes 22 bringt eine Führungs-/Dichtlippe 25. Die ist gebildet von einem eingezogenen Querboden 26 des Innentopfes 23. Zentral läßt der besagte Querboden 26 eine Durchtrittsöffnung für das führend wirkende röhrchenförmige Mundstück 20.

Der Kolben 24 setzt sich in der dem Portionierungsraum 22 abgewandten Richtung in eine Betätigungshandhabe 27 fort. Die kann dem Kolben 24 gleich angeformt sein oder aber, wie beim Ausführungsbeispiel bevorzugt, über einen Rastkragen 28 des Kolbens mit diesem in Verbindung stehen. In gefülltem Zustand des Portionierungsraumes 22 steht die Betätigungshandhabe 27 mindestens um das Maß des anschlagbegrenzten Ausgabe- bzw. Saughubes über den oberen Rand des Endkragens 16 frei vor. Der Rastkragen 28 formt eine nach auswärts gerichtete Rastrippe, welche mit einer sie unterfangenden inneren Gegenrippe der Betätigungshandhabe 27 zusammenwirkt.

Wie beispielsweise Figur 1 deutlich entnehmbar, führt sich die Betätigungshandhabe 27 mit einem äußeren, am kolbenseitigen Ende ausgebildeten Ringkragen 29 an der korrespondierenden, zylindrischen Innenwand des zylinderbildenden Innentopfes 23. Über diesen führend wirkenden Ringkragen 29 ist zugleich eine Ausziehsicherung der angeklipsten Betätigungshandhabe 27 insofern verwirklicht, als besagter Ringkragen 29 auswärts gerichtet von einem umlaufenden Rastvorsprung 30 des Innentopfes 23 übergriffen ist, welcher zur Erleichterung der Steckmontage zugangsseitig eine trichterförmige Auflaufschulter ausbildet.

Eine Decke 31 der weitestgehend hohl gestalteten Betätigungshandhabe 27 nimmt einen gefälligen, domförmigen Verlauf. Die materialsparende Höhlung des Innenraumes der Betätigungshandhabe 27 kann in einem von der Decke 31 ausgehenden, freistehenden Röhrchen 32 bestehen, welches auf einen zentralen Zapfen 33 des Kolbens 34 formpassend und reibungsschlüssig aufgesteckt ist. Der obenerwähnte Rastkragen 28 dagegen umgibt engschließend die Mantelwand des Röhrchens 32 im überlappenden Verbindungsbereich zum Kolben 24.

Im Übergangsbereich zwischen Kolben 24 und dem dort ansetzenden oberen Ende des Mundstücks 20 befindet sich eine Überströmöffnung 34. Diese schafft eine Strömungsverbindung zwischen dem vom Innentopf 23 gebildeten Portionierungsraum 22 bzw. Zylinderraum und dem Inneren bzw. Einsaugkanal 21 des rohrförmigen Mundstücks 20.

Die Ausgabeeinheit, sprich Flüssigkeitsportonierer A, übergreift mit einem Außentopf 35 den zylindrischen Endkragen 16 des Zwischenstücks C. Sein obenliegender, horizontaler Topfboden geht als Ringbrücke in den konzentrisch liegenden Innentopf 23 über. So entsteht ein U-wandiger, kappenförmiger, die gleichsinnig U-förmig gestaltete Endpartie des Zwischenstücks C übergreifender, ringförmiger Steckschacht 37.

Die Zuordnung des kappenförmigen Abschnitts des Flüssigkeitsportionierers A ist rastiert. Hierzu ist dem behälterseitigen Rand des Außentopfes 35 innenseitig ein Rastwulst 38 angeformt. Dieser untergreift den darüberliegenden Stirnrand 16' des Endkragens 16. Die in Übergriffsstellung (Figur 1) vorliegende Verrastung kann willensbetont überwunden werden. Als Abziehhilfe dient ein die zylindrische Mantelwand querschnittsmäßig überragender Ringsteg 39 im Bereich des Topfbodens 36.

Das erläuterte Verrastungsmittel ist aber weitergebildet im Sinne der Schaffung einer Originalitätssicherung. Oberhalb des Rastwulstes 38 liegt dazu eine kerbtalartig eingeschnittene, umlaufende Sollreißrinne 40. Diese hat außenseitig eine etwas abstehende Reißlasche 41.

Bei vollständigem Trennen der ringförmigen Originalitätsstreifen 42 entfällt die beschriebene Verrastung. Sie kann aber beibehalten werden, wenn beispielsweise lediglich über einen 45°-Winkel-Bereich der nach innen exponiert stehende Rastwulst 38 entfernt wird. In diesem Falle würde die Sollreißrinne 40 auch noch zwei vertikal orientierte, den Abreißbereich begrenzende Kerben besitzen (nicht dargestellt).

Die Einsenkung des Flüssigkeitsportionierers A geschieht zentrierend und, soweit funktionserforderlich, abgedichtet. Die Abdichtung gegenüber der Ventilkammer 9 als Strömungsschleuse zum Einsaugkanal 21 hin ist dadurch erreicht, daß das Mundstück 20 mit einer Ringschulter 43 dichtend gegen die Steuerstufe 7 des ortsfesten Zwischenstücks C fährt. Dort befindet sich ein Einsatz 44 aus entsprechend elastischem Material, beispielsweise aus Gummi oder vergleichbarem Kunststoff. Die Ringschulter 43 liegt in einem Winkel von ca. 45° nach oben und außen hin ansteigend und schließt dann an einen zylindrischen, nach unten gehenden Abschnitt an. In diesen stumpfwinkligen Winkelraum schmiegt sich ein ringförmiger Dichtungsvorsprung 45 des Einsatzes 44 satt ein.

Eine zentrierend und zugleich abdichtend wirkende Stelle besteht im Bereich der oberen Öffnung 19 der Tasche 6, und zwar dort zwischen dem Rand dieser Öffnung und einem kegelstumpfförmigen Ansatz 46, der sich zum Topfboden 36 hin bis zur Eckanlage verbreitert. Eine zweite führend und dichtend wirkende Stelle liegt am unteren, freien Ende des Innentopfes 23, und zwar zwischen der Mantelwand dieses Innentopfes 23 und einer nach innen gerichteten, rotationssymmetrischen Erhöhung 47 der Innenwand 5. Der Erhöhung 47 ist eine trichterförmige, nach unten konvergierende Auflaufschräge vorgeschaltet. Über diese läuft eine in Steckrichtung fliehend ausgerichtete bzw. konisch gestaltete Ringschulter im Bereich des freien Endes auf Höhe des Querbodens 26 zentrierend auf.

Die trichterförmige Verjüngung 8 weist eine Luftausgleichsöffnung 48 auf. Diese stellt eine VerbindLng zwischen dem Innenraum der Verjüngung 8 und dem Raum oberhalb des Flüssigkeitsspiegels 49 des Behälters B dar.

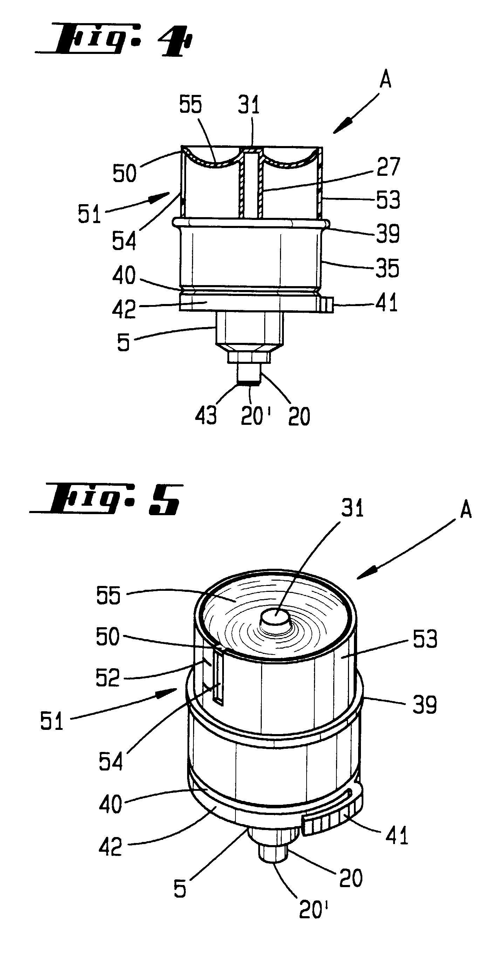

Wie der Zeichnung in den Figuren 4 und 5 entnehmbar, geht die Betätigungshandhabe 27 nach oben hin in einen quer ausladenden Zeigefinger 50 über. Dieser ist Bestandteil einer über die Höhenstellung der Betätigungshandhabe 27 ablesbaren Füllstandsanzeige 51. Der Verlagerungsweg ist skaliert. Die Skala trägt das Bezugszeichen 52 und befindet sich an einer die Decke 36 überragenden, zylindrischen Umwand 53. Die die Betätigungshandhabe 27 umgebende Umwand 53 weist zur Vertikalführung des Fingers 50 einen vertikal gerichteten Schlitz 54 auf. Darin gleitet der Finger 50.

Wie den besagten Figuren weiter entnehmbar, geht die Decke 31 in einen Ringteller 55 über. Der führt sich peripher an der Innenwand, ist ringgemuldet und stellt einen deckelartigen Abschluß der Oberseite des Flüssigkeitsportionierers A dar. Bei berührender Führung des Randes des Ringtellers 55 kann die eingeschlossene Luft aus dem Schlitz 54 austreten und umgekehrt.

Alle Teile bestehen aus Kunststoff.

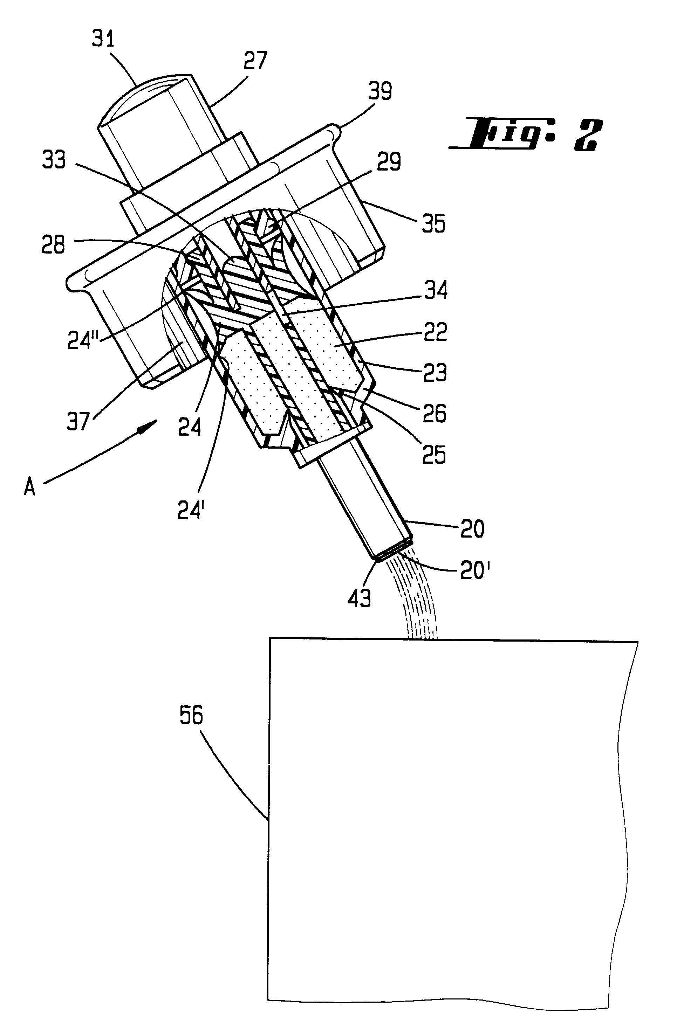

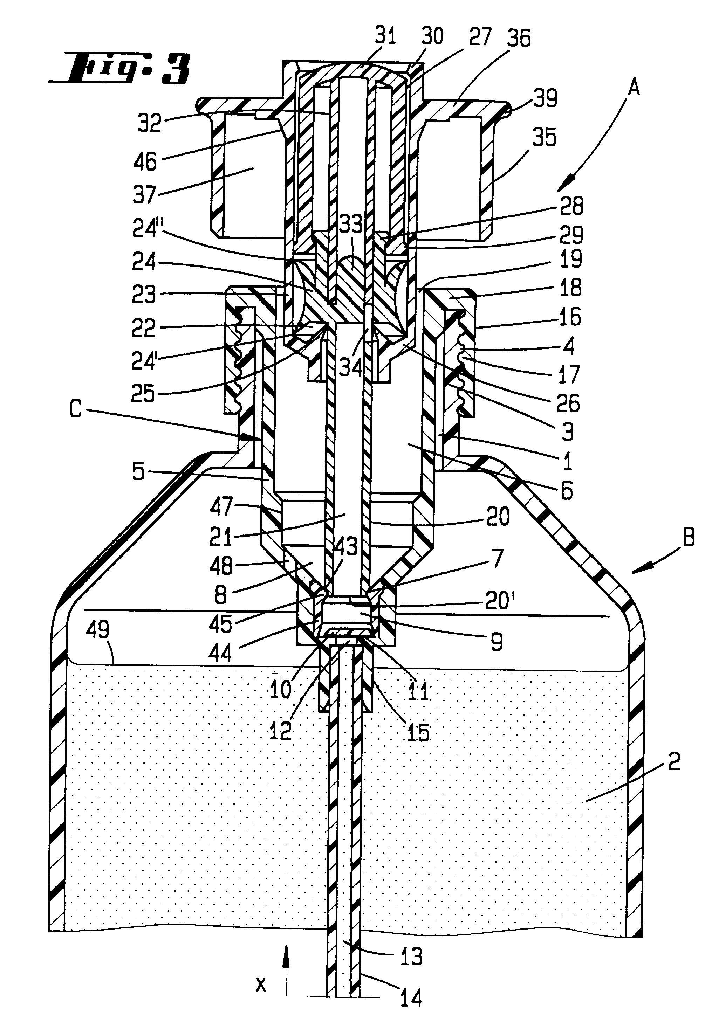

Die Funktion ist, kurz zusammengefaßt, wie folgt: Unter Zuordnen des Flüssigkeitsportionierers A durch volles Einsenken seines Innentopfes 23 in die Tasche 6 wird das bei entleertem Portionierungsraum 22 maximal vorstehende Mundstück 20 durch Gegenhalt der Steuerstufe 7 widerlagerartig gehalten, während der Innentopf 23, also der Zylinder, den Kolben 24 entgegen der Richtung des Pfeiles x überläuft. Dabei vergrößert sich der Portionierungsraum 22. Über den so entstehenden Unterdruck saugt sich die Flüssigkeit 2 via Steigrohr 14 unter Passieren der Ventilkammer 9, dann den Einsaugkanal 21 passierend, in den Zylinderraum ein. Sobald die Innenseite des Topfbodens 36 gegen die korrespondierende Oberseite der Ringbrücke 18 getreten ist, ist der Füllvorgang abgeschlossen. Der Flüssigkeitsportionierer 8 kann aus der Tasche 6 gezogen werden, um die entnommene, dosierte Menge an Flüssigkeit 2 beispielsweise einem Behälter 56 zuzuführen (vergl. Figur 2). Das Ausbringen geschieht dabei wie bei einer Spritze unter Eindrücken der Betätigungshandhabe 27, nur daß dabei das röhrchenförmige, mit dem Kolben 24 verbundene Mundstück 20 aus seiner den maximalen Füllstand anzeigenden Rückdrückstellung (Figur 4) zunehmend in die maximale Ausfahrstellung tritt. Es liegt dann wieder die aus Figur 3 ersichtliche Situation vor.

Jedes ordnungsgemäße Zurückstellen des Flüssigkeitsportionierers A in die Tasche 6 hat ein automatisches Befüllen zur Folge.

Im Nachstehenden werden die erste und zweite Variante der Vorrichtung eingehender beschrieben. Die Bezugsziffern sind sinngemäß angewandt, zum Teil ohne textliche Wiederholungen.

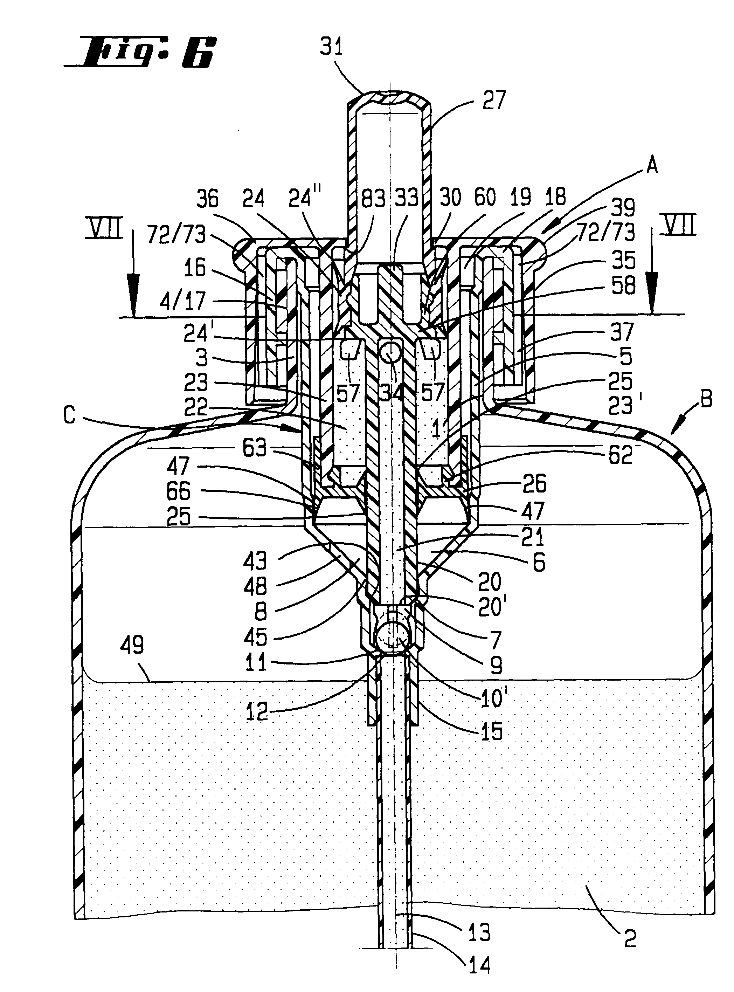

Um zu vermeiden, daß der Kolben 24 mit seiner unteren Führungs-/Dichtlippe 24' selbst hubanschlagbegrenzend gegen die korrespondierende Oberseit des Querbodens 26 fährt (vergleiche Figur 3), sind bei den weitergebildeten Lösungen gemäß Figuren 6 und 12 wirksame Vorkehrungen getroffen. Diese bestehen darin, daß unterhalb des Kolbens 24 Hubbegrenzungsanschläge 57 vorstehen. Die sind von solcher Länge, daß sie voreilend auf der Oberseite des Querbodens 26 des Portionierungsraumes 22 aufsetzen. Es handelt sich um gleich angeformte, rippenartige Vorsprünge. Letztere sind radial orientiert und berücksichtigen in ihrer Kontur die Gegenkontur des Querbodens 26, und zwar auch in dem Sinne, daß die vom Querboden nach oben hin ausgehende Führungs-/Dichtlippe 25 im hubbegrenzenden Anschlagfalle nicht verformt wird.

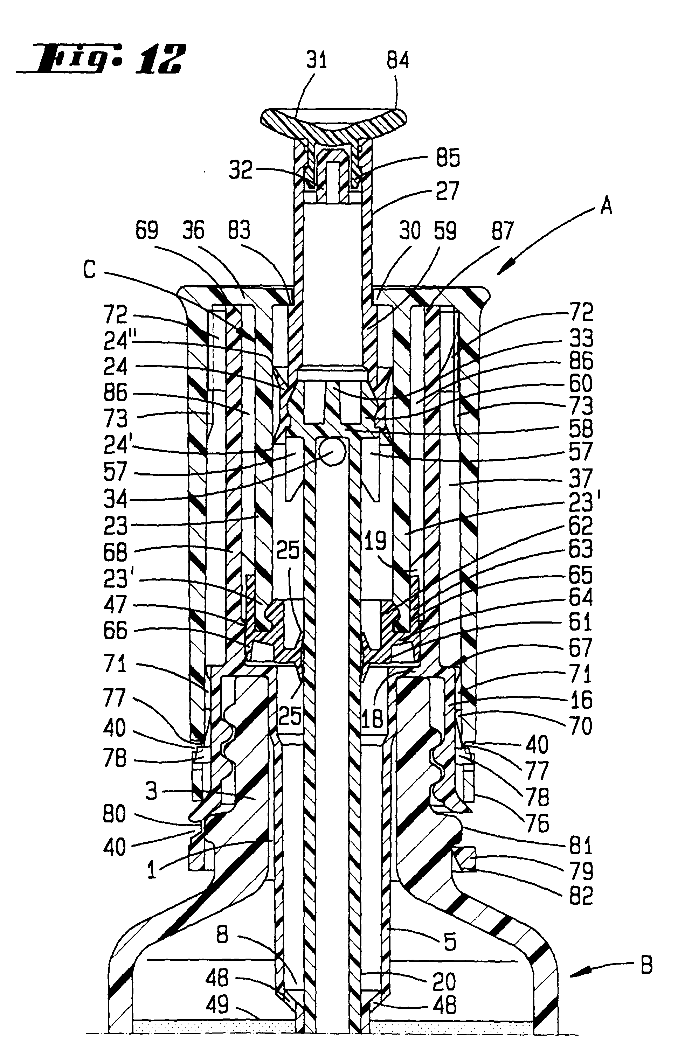

Wie Figur 11 entnehmbar, ist eine gleichmäßige kreuzförmige Anordnung der Hubbegrenzungsanschläge 57 vorgenommen. Sie liegen auf gleicher Querschnittshöhe wie die Überströmöffnung 34 des als Entnahmehülse fungierenden Mundstücks 20, das sich auch hier oberhalb der Überströmöffnung 34 in einen den Einsaugkanal 21 verschließenden, zentralen Zapfen 33 fortsetzt. Der Fuß des Zapfens 33 geht in eine die Hubbegrenzungsanschläge 57 tragende, gegenüber der zylindrischen Innenwandung des Innentopfes 23 zurückspringende, kreisförmige Querwand 58 über.

In beiden Varianten sitzt der Kolben 24 an der Betätigungshandhabe 27. Er ist letzterer gleich angeformt im Gegensatz zur Grundlösung, nach der der Kolben 24 in dieser Weise am Mundstück 20 sitzt. Der Kolben 24 ist praktisch eine Verlängerung der zylindrischen Ringwand 59 besagter Betätigungshandhabe 27. Es handelt sich um einen ausgestellten Wandungsfortsatz, welcher die oben beschriebene, kolbentypische Form aufweist, also insbesondere die randseitigen Führungs-/Dichtlippen 24',24'' ausbildet. Das dem Portionierungsraum 22 zugewandte Ende sprich Ringwand 59 der Betätigungshandhabe 27, nimmt im Innenbereich der freien Ringwand 59 ein an die Querwand 58 anschließendes Ende des Einsaugkanales 21 bzw. Mundstücks 20 auf. Es handelt sich um eine klipstechnische Zuordnung. Hierzu geht von der Oberseite der Querwand 58 ein kurzes Rohrteil 60 aus, versehen, mit einer peripheren Ringrippe, die rastierend in eine korrespondierende Ringnut an der Innenseite der Ringwand 59 eingreift. Dieses, auch einem Topf vergleichbare, in Überlappung zur Ringwand stehende Rohrteil 60, eben verschlossen durch die Querwand 58, steift den zweckmäßig flexibler eingestellten Kolben von innen her aus, wobei andererseits die Flexibilität des kolbenbildenden Materiales günstigst für die Herbeiführung der Kupplung zwischen der Betätigungshandhabe 27 und dem Mundstück 20 genutzt wird.

Wie den Zeichnungen entnehmbar, springt das topfförmige Rohrteil 60 deutlich vom Rand der Querwand 58 zurück, so daß sich eine definierte Randauflage zwischen Kolben 24 und der Querwand 58 ergibt.

Ein weiterer Unterschied zur Grundform der Vorrichtung liegt darin, daß der Querboden 26 als separates Bauteil gestaltet ist. Da er die Aufgabe einer Dichtungsmanschette hat, die hier sogar insofern weitergestaltet ist, als außer der nach oben gehenden Führungs-/Dichtungslippe 25 auch noch in Gegenrichtung eine gleichbezeichnete Führungs-/Dichtlippe 25 verläuft, kann bestens auf das geeignetste Material zurückgegriffen werden. Wie den Zeichnungen entnehmbar, ist dieser separat gestaltete Querboden 26 als auf den unteren, freien Rand 23' des Innentopfes 23 aufgeklipstes Ringstopfen-Teil 61 gestaltet ist. Entsprechend geht von einem innenseitigen Kragen 62, und zwar mantelwandseitig desselben, eine Rastrippe aus, welche in eine korrespondierende Rastnut an der Innenseite des Innentopfes 23 eingreift. Der Kragen 62 hat eine periphere Fortsetzung in Form konzentrischen Wandung 63. Die überragt die Oberseite des Kragens 62 und wirkt so steckzentrierend bei der Montage. Begünstigend kann innenseitig des Kragens noch eine Fasung vorgenommen sein, wie dargestellt.

Kragen 62 und Wandung 63 gehen von einer gemeinsamen Ringbrücke 64 des Teiles 61 aus. Die drei genannten Elemente umschreiben einen U-förmigen, nach oben offenen Steckschaft 65 für den Rand 23'.

In vertikaler Verlängerung setzt, in Richtung des Behälters weisend, eine Dichtlippe 66 an. Die wirkt mit einer auch hier vorgesehenen rotationssymmetrischen Erhöhung 47 der Innenwand 5 in der beschriebenen Weise zusammen. Dichtlippe 66 und untere Dichtlippe 25 stehen auch in der in Figur 12 dargestellten Grundstellung berührungsfrei.

Die zweite Variante verkörpert insofern auch noch eine Besonderheit, als dort das Herzstück der Vorrichtung, der Portionierungsraum 22, nicht in der Öffnung 1 selbst, sondern auch außerhalb des Halses 3 des Behälters B liegt. Eine solche Lösung empfiehlt sich bei Behältern B, deren lichte Öffnung 1 für die entsprechende raumsparende Unterbringung nicht ausreicht. Trotzdem liegt eine den Hals 3 querschnittsmäßig nicht nennenswert überschreitende Breite dieser Vorrichtung vor. Die das ermöglichende Weiterbildung ist am Zwischenstück C vorgenommen. Dort geht von dem aus Endkragen 16, Ringbrücke 18 und Innenwand 5 gebildete, den Behälterhals 1 reiterförmig übergreifenden Fußteil 67 eine Ringwand 68 aus. Letztere ist zylindrisch. Sie stellt praktisch eine nach oben gehende Verlängerung der Innenwand 5 dar. Sie endet in radialem Abstand vor der Mantelwand des Endkragens 16, beläßt also zwischen diesem und der Innenwand des Außentopfes 35 einen deutlichen ringförmigen Spalt, oben bezeichnet als Steckschacht 37. Der oberseitige Stirnrand 69 der besagten Ringwand 68 bildet den Steckbegrenzungsanschlag für den Außentopf 35, indem die Innenseite des Tupfbodens 36 dagegentritt. Das Fußteil 67 besitzt ein etwa rotationssymmetrisches Y-Profil. Der Y-Steg weist als Ringwand 68 nach oben.

Im besagten Spalte respektive Steckschacht 37 sind Mittel einer Drehmitnahme untergebracht. Letztere erlauben es, unter Drehen des Außentopfes 35 den Endkragen 16 schraubtechnisch zu betätigen. Letzterer steht, wie oben angeführt, als Schraubkappe in Gewindeeingriff zum Hals 3. Dessen Außengewinde 4 greift in ein passendes Innengewinde 17 des Zwischenstücks C ein. Konkret sieht diese Drehmitnahme so aus, daß Außentopf 35 und Endkragen 16 unter axial gerichteter Zuordnung in eine ratschenförmige Mitnahmeeingriffsstellung zueinander verschiebbar sind. Diese Stellung ist in den Figuren 6 und 12 wiedergegeben und rastiert. Hierzu dient ein Verriegelungsnokken 70 im Bereich des unteren Randes des Außentopfes 35. Der untergreift einen willensbetont überwindbaren Anschlagsteg 71 des Endkragens 16. Zur entsprechenden Aufschraub-Drehmitnahme gehen im oberen Endbereich vom Endkragen 16 (Figur 6) oder von der Ringwand 68 Dreh-Mitnehmerstege 72 aus. Sie liegen diametral einander gegenüber und sind mantelwandseitig gleich mit angeformt. Die Dreh-Mitnahmerstege 72 wirken mit einer entsprechenden Anzahl Anschlagstegen 73 an der Innenseite des Außentopfen 35 zusammen.

Die Mitnahmerichtung ergibt sich aus Figur 7. Dort sind insgesamt vier Dreh-Mitnahmestege 72 und vier Anschlagstege 73 winkelgleich verteilt angeordnet. Um den unwirksamen Gegenlauf der ratschenförmigen Funktion zu ermöglichen, sind die Rückflanken der besagten Stege verrundet. Die mitnahmeaktiven Brustflanken der Stege besitzen dagegen eine auf das Zentrum der Vorrichtung weisende radiale Ausrichtung.

Die radiale Ausweichbewegung in nicht mitnahmebeabsichtigter Richtung beruht beim Ausführungsbeispiel gemäß Figur 7 wesentlich auch auf der Flexibilität des verwendeten Materiales des Außentopfes 35 und des Endkragens 16.

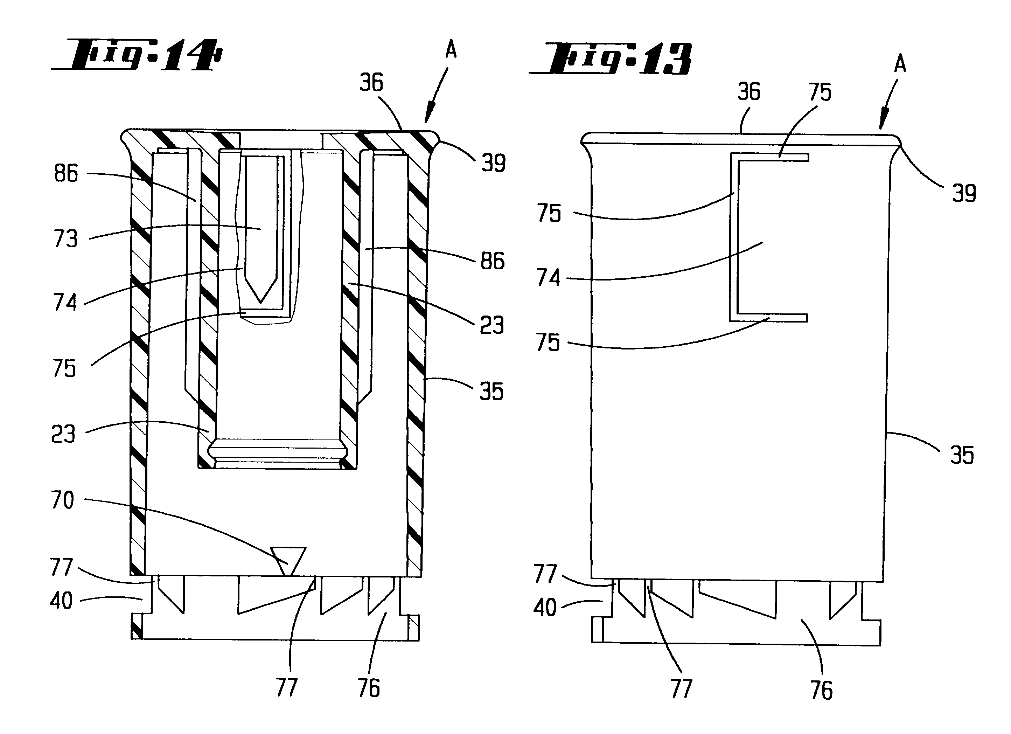

Um hier eine größere Federfähigkeit zu erreichen, sei auf die Lösung gemäß Figur 12 verwiesen. Dort sind die Partien der Wandung des Außentopfes 35, welche die Anschlagstege 73 tragen, auf lappenartig freigeschnittenen Wandungsabschnitten 74 positioniert (vergleiche Figuren 13 und 14). Figur 14 macht überdies deutlich, daß die Anschlagstege 73 wie im übrigen auch die Dreh-Mitnehmerstege 72 in einer stets freien Steckverbindung einander axial zugeführt werden können, indem beide Stege entsprechende, gegeneinander ausspitzende Abweisflanken besitzen. Der Freischnittspalt, er ist C-förmiger Gestalt, trägt das Bezugszeichen 75. Der C-Steg ist axial orientiert.

Wie der Grundform, beschrieben unter den Positionen 40,41, ist auch der zweiten Variante eine Originalitätssicherung gegeben. Eine deckt das entsprechende Sicherungsbedürfnis des Außentopfens 35 ab. Sie besteht aus einem endseitigen Originalitätsring 76. Letzterer steht unter Bildung einer wandungsdicken-reduzierenden Sollreißlinie 40 mit dem Außentopf in Verbindung. Die Sollreißlinie 40 erstreckt sich unmittelbar unterhalb des Verriegelungsnockens 70 und besteht aus einer Reihe querschnittsreduzierter Materialbrücken 77, die nach oben hin ausspitzen. In den Bereich der Materialbrücken ragen zwei diametral einander gegenüberliegende, vom Endkragen 16 radial auswärts abstehende Trennocken 78, welche bei Relativbewegung der Teile 35 und 16 trennend wirken. Die Trennocken 78 sind keilförmig. Zudem sind sie außen hinterschnitten, so daß eine schadfreie Montage gegeben ist.

Eine weitere Originaltätsicherung besteht zwischen dem Zwischenstück C und dem Behälter B. Deren Originalitätsring ist mit 79 bezeichnet und sitzt gleichfalls über querschnittsreduzierte Materialbrücken 80 an einem unteren Rand, hier des Endkragens 16. Die nach oben, d.h. in Richtung der Betätigungshandhabe 27 ausspitzenden Materialbrücken 80 liegen in einer wandungsdicken-minimierten Zone, gleichfalls bezeichnet als Sollreißlinie 40. Eine Gelenklasche, die selbst nicht durchtrennt wird, hält den abgestemmten Originalitätsring 79 unverlierbar am Zwischenstück.

Besagter Originalittätsring 79 steht in Wirkverbindung zu einem umlaufenden Ringbund 81 am Hals 3 des Behälters B. Der Ringbund 81 ist in Zuordnungsrichtung überwindbar zufolge einer innenseitigen Auflaufschräge 82 des Originalitätsringes 79. In Gegenrichtung liegt dagegen die aus Figur 12 ersichtliche Sperre vor. Die Grundzuordnung der Teile der Vorrichtung sind drehstellungsorientiert.

Um die Portionierungsmenge ausgehend von einer maximalen Entnahme abzustufen, kann eine Anschlagstufe 83 auf der Mantelfläche der Betätigungshandhabe 27 vorgesehen sein, diese verhindert ein völliges Zurückziehen der Betätigungshandhabe 27 bis in eine Anschlagstellung zur Innenseite des Topfbodens 36. Die Entnahmevariation erfordert daher nur das Auswechseln der Betätigungshandhabe 27 gegen eine andere, mit näher zum Kolben 24 liegender Anschlagstufe 83 oder weiter entfernt vom Kolben 24 angeordneter Anschlagstufe 83.

Bleibt noch festzuhalten, daß die Betätigungshandhabe 27 gemäß Variante Figur 12 eine größere Betätigungsfläche aufweist, als es die Decke 31 der Grundform und der ersten Variante bietet. Unter Beibehaltung der von innen her erfolgenden Steckzuordnung der Betätigungshandhabe 27 ist der hieraus nutzbare Querschnitt der Decke 31 deutlich vergrößert durch einen auf das freie Ende der Betätigungshandhabe 27 aufsetzbaren, durchmessergrößeren Teller 84. Er weist zentral einen druckknopfartigen Steckzapfen 85 auf, der verrastend in das offene, freie Ende der Betätigungshandhabe eingeklipst ist. Der Teller 84 ist schwach konkav gewölbt. Der Steckzapfen 85 hat eine reversible Klipsverbindung zufolge nach innen gerichteten Freiganges des z.B. längsgeschlitzten Steckzapfens, so daß dieses Bauteil bei dem angedeuteten Wechsel der Betätigungshandhabe kein Hindernis findet am hier nur noch rudimentär vorhandenen Röhrchen 32. Allerdings bedarf es einer willensbetonten Abziehbetätigung.

Zur Erzielung einer guten radial abgestützten Führung des Innentopfes 23 über nahezu die gesamte Stecklänge ist der in der Grundform beschriebene kegelstumpfförmige Ansatz 46, der hier nur die Endlage zentriert, durch vertikal verlaufende Führungsrippen 86 weitergebildet. Die Rippenstirnkanten konvergieren zueinander, so daß im Verein mit einer innenseitigen Kantenfasung der Tasche 6 eine selbstzentrierende Zuordnung, d.h. ein verkippungsfreies Einfahren des Innentopfes 23 in die Tasche 6 des Zwischenteils C gegeben ist.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein.

## Patentansprüche

1. Vorrichtung zur portionierten Entnahme von Flüssigkeit (2) aus der Öffnung (1) eines Behälters (B) durch Einsaugen der Flüssigkeit (2) mittels eines Kolbens (24) in einen Portionierungsraum (22) einer Ausgabeeinheit (Flüssigkeitsportionierer A), aus welchem die Flüssigkeit (2) durch entgegengesetzte Vorverlagerung des Kolbens (24) mittels einer Betätigungshandhabe (27) durch ein Entleerungs-Mundstück (20) ausdrückbar ist, wobei die Vorrichtung weiter ein in die Öffnung (1) des Behälters (B) eingesetztes, bis unterhalb des Behälter-Flüssigkeitsspiegels (49) reichendes Zwischenstück (C) aufweist, das eine Tasche (6) bildet, in welche der von einem Innentopf (23) der Ausgabeeinheit gebildete Portionierungsraum (22) einsenkbar ist, und welches Zwischenstück (C) eine Steuerstufe (7) aufweist, an der bei Einsenken der Ausgabeeinheit in die Tasche (6) der bei entleertem Portionierungsraum (22) maximal vorstehende Kolben (24) durch Gegenhalt widerlagerartig gehalten ist, so daß der Portionierungsraum (22) den Kolben (24) unter Verlagerung in die Füllposition überläuft, dadurch gekennzeichnet, daß das Mundstück (20) mit dem Kolben (24) verbunden ist und die Mundstück-Mündung (20') gegen die Steuerstufe (7) fährt, welche sich am unteren Ende der Tasche (6) befindet.

2. Vorrichtung nach Anspruch 1 oder insbesondere danach, dadurch gekennzeichnet, daß die Ausgabeeinheit mit der Mantelwand eines Innentopfes (23) in Einsteckstellung (Figur 1,6,12) an der Innenwand (5) des Zwischenstücks (C) in Führungs-/Dichtanlage (46/47) tritt.

3. Vorrichtung nach einem oder mehreren der vorhergehenden Ansprüche oder insbesondere danach, dadurch gekennzeichnet, daß das Mundstück (20) mit einer Ringschulter (43) dichtend gegen die Steuerstufe (7) tritt.

4. Vorrichtung nach einem oder mehreren der vorhergehenden Ansprüche oder insbesondere danach, dadurch gekennzeichnet, daß die Ausgabeeinheit (Flüssigkeitsportionierer A) mit einem Außentopf (35) einen Endkragen (16) des Zwischenstücks (C) übergreift.

5. Vorrichtung nach einem oder mehreren der vorhergehenden Ansprüche oder insbesondere danach, gekennzeichnet durch eine Verrastung der Übergriffsstellung (Figur 1,12).

6. Vorrichtung nach einem oder mehreren der vorhergehenden Ansprüche oder insbesondere danach, dadurch gekennzeichnet, daß die Verrastungsmittel (16'/38) in einen Originalitätsstreifen (42) weitergebildet sind.

7. Vorrichtung nach einem oder mehreren der vorhergehenden Ansprüche oder insbesondere danach, dadurch gekennzeichnet, daß der koaxial unter dem Mundstück (20) liegenden Mündung (20') des Einsaugkanals (21) des Zwischenstücks (C) ein Ventil (Klappventil 10 oder Kugelventil 10') zugeordnet ist.

8. Vorrichtung nach einem oder mehreren der vorhergehenden Ansprüche oder insbesondere danach, dadurch gekennzeichnet, daß der am Ende des rohrförmigen Mundstücks (20) materialeinheitlich angeformte Kolben (24) mit der Betätigungshandhabe (27) verklipst ist.

9. Vorrichtung nach einem oder mehreren der vorhergehenden Ansprüche oder insbesondere danach, dadurch gekennzeichnet, daß die Betätigungshandhabe (27) sich mit einem Ringkragen (29) an der Innenwand des Innentopfes (23) der Ausgabeeinheit führt.

10. Vorrichtung nach einem oder mehreren der vorhergehenden Ansprüche oder insbesondere danach, gekennzeichnet durch eine im Bereich des Kolbens (24) angeordnete Überströmöffnung (34) zwischen dem vom Innentopf (23) gebildeten Zylinderraum (Portionierungsraum 22) des Mundstückrohres (20).

11. Vorrichtung nach einem oder mehreren der vorhergehenden Ansprüche oder insbesondere danach, gekennzeichnet durch eine über die Höhenstellung der Betätigungshandhabe (27) ablesbare Füllstandsanzeige (51).

12. Vorrichtung nach einem oder mehreren der vorhergehenden Ansprüche oder insbesondere danach, dadurch gekennzeichnet, daß unterhalb der Kolbens (24) Hubbegrenzungsanschläge (57) vorstehen, welche, dem Kolben (24) voreilend, auf einen Querboden (26) des Portionierungsraumes (22) aufsetzen.

13. Vorrichtung nach einem oder mehreren der vorhergehenden Ansprüche oder insbesondere danach, dadurch gekennzeichnet, daß der Querboden (26) als auf den unteren Rand (23') des Innentopfes (23) aufgeklipstes Teil (61) gestaltet ist.

14. Vorrichtung nach einem oder mehreren der vorhergehenden Ansprüche oder insbesondere danach, dadurch gekennzeichnet, daß der Kolben (24) am dem Portionierungsraum (22) zugewandten Ende einer Ringwand (59) der Betätigungshandhabe (27) sitzt.

15. Vorrichtung nach einem oder mehreren der vorhergehenden Ansprüche oder insbesondere danach, dadurch gekennzeichnet, daß in den Innenbereich der freien Ringwand (59) der Einsaugkanal (21 bzw. das Mundstück (20) als Rohrteil (60) eingeklipst ist.

16. Vorrichtung nach einem oder mehreren der vorhergehenden Ansprüche oder insbesondere danach, dadurch gekennzeichnet, daß das Zwischenstück (C) zur Erzielunq einer den Behälterrand überragenden Positionierung der Vorrichtung eine Ringwand (68) besitzt, die an einem reiterförmig auf dem Behälterhals (1) sitzenden Fußteil (67) angeordnet ist.

17. Vorrichtung nach einem oder mehreren der vorhergehenden Ansprüche oder insbesondere danach, dadurch gekennzeichnet, daß Außentopf (35) und Endkragen (16) in eine ratschenförmige Mitnahmeeingriffsstellung zueinander schiebbar sind.

## Claims

1. Device for removing portions of liquid (2) from the opening (1) of a container (B) by aspiration of the liquid (2) by means of a piston (24) into a portioning space (22) of a discharge unit (liquid portioner A), from which the liquid (2) may be expressed by opposed predisplacement of the piston (24) by means of an actuating handle (27) through an evacuation mouthpiece (20), the device further having an intermediate piece (C) inserted into the opening (1) of the container (B) extending to beneath the level (49) of the liquid in the container, said intermediate piece (C) forming a pocket (6) into which the portioning space (22) formed by an inner cup (23) of the discharge unit may be lowered, and which intermediate piece (C) has a control step (7) upon which, when the discharge unit is lowered into the pocket (6), the piston, which projects to a maximum when the portioning space (22) is emptied, is held by counterpressure in an abutment fashion, so that the portioning space (22) runs over the piston (24) during displacement into the filling position, characterised in that the mouthpiece (20) is connected to the piston (24) and the mouthpiece mouth (20') moves against the control step (7) which is located at the lower end of the pocket (6).

2. Device according to claim 1 or in particular according thereto, characterised in that the discharge unit enters into a guidance/sealing contact (46/47) with the surrounding wall of an inner cup (23) in the thrustin position (Figures 1, 6, 12) on the inner wall (5) of the intermediate piece (C).

3. Device according to one or more of the preceding claims or particularly according thereto, characterised in that the mouthpiece (20) enters with an annular shoulder (43) into sealing contact with the control step (7).

4. Device according to one or more of the preceding claims or in particular according thereto, characterised in that the discharge unit (liquid portioner A) engages with an outer cup (35) over a terminal collar (16) of the intermediate piece (C).

5. Device according to one or more of the preceding claims or in particular according thereto, characterised by a resilient engagement of the over-engaged position (Figures 1, 12).

6. Device according to one or more of the preceding claims or in particular according thereto, characterised in that the resilient engagement means (16'/38) are further developed to form an authenticating strip (42).

7. Device according to one or more of the preceding claims or in particular according thereto, characterised in that a valve (clap valve 10 or ball valve 10') is associated with the mouth (20'), lying coaxially under the mouthpiece (20), of the aspiration channel (21) of the intermediate piece (C).

8. Device according to one or more of the preceding claims or in particular according thereto, characterised in that the piston (24) integrally formed from the same material at the end of the tubular mouthpiece (20) is clipped to the actuating handle (27).

9. Device according to one or more of the preceding claims or in particular according thereto, characterised in that the actuating handle (27) is guided with an annular collar (29) on the inner wall of the inner cup (23) of the discharge unit.

10. Device according to one or more of the preceding claims or in particular according thereto, characterised by an overflow opening (34) disposed in the area of the piston (24) between the cylindrical space (portioning space 22) of the mouthpiece tube (20) formed by the inner cup (23).

11. Device according to one or more of the preceding claims or in particular according thereto, characterised by an indication of filling level (51) readable via the vertical position of the actuating handle (27).

12. Device according to one or more of the preceding claims or in particular according thereto, characterised in that stroke limiting stops (57) project beneath the piston (24), which limiting stops, leading the piston (24), sit on a transverse base (26) of the portioning space (22).

13. Device according to one or more of the preceding claims or in particular according thereto, characterised in that the transverse base (26) is formed as a part (61) clipped onto the lower edge (23') of the inner cup (23).

14. Device according to one or more of the preceding claims or in particular according thereto, characterised in that the piston (24) sits on the end facing the portioning space (22) of an annular wall (59) of the actuating handle (27).

15. Device according to one or more of the preceding claims or in particular according thereto, characterised in that the aspiration channel (21) or the mouthpiece (20) is clipped as a tubular part (60) in the inner area of the free annular wall (59).

16. Device according to one or more of the preceding claims or in particular according thereto, characterised in that the intermediate piece (C), in order to achieve a positioning of the device projecting over the edge of the container wall, has an annular wall (68), which is disposed on a foot portion (67) sitting astride on the container neck (1).

17. Device according to one or more of the preceding claims or in particular according thereto, characterised in that the outer cup (35) and terminal collar (16) may be pushed into a ratchet-like drive engagement position relative to one another.

## Revendications

1. Dispositif de prélèvement de portions de liquide (2) à partir de l'ouverture (1) d'un récipient (B) par aspiration du liquide (2) au moyen d'un piston (24) dans une chambre de mise en portion (22) d'une unité de distribution (dispositif de mise en portions de liquide A), à partir de laquelle le liquide (2) peut être expulsé à travers une pièce d'embouchure de vidage (20) par un déplacement en sens opposé du piston (24) au moyen d'un manche d'actionnement (27), le dispositif présentant en outre une pièce intermédiaire (C) qui est introduite dans l'ouverture (1) du récipient (B), va jusqu'en dessous du niveau du liquide du récipient (49) et forme une trémie (6) dans laquelle la chambre de mise en portion (22), formée d'un pot intérieur (23) de l'unité de distribution, peut être descendue, cette pièce intermédiaire (C) présentant un ressaut de commande (7) sur lequel, lors de la descente de l'unité de distribution dans la trémie (6), le piston avancé au maximum lors du vidage de la chambre de mise en portion (22) est maintenu par contre-appui à la manière d'une butée de façon que la chambre de mise en portion (22) passe par-dessus le piston (24) avec déplacement dans la position de remplissage, caractérisé en ce que la pièce d'embouchure (20) est reliée au piston (24) et en ce que l'embouchure (20') de la pièce d'embouchure va contre le ressaut de commande (7) qui se trouve à l'extrémité inférieure de la trémie (6).

2. Dispositif suivant la revendication 1, caractérisé en ce que l'unité de distribution avec la paroi d'enveloppe d'un pot intérieur (23) vient, en position d'enfoncement (figures 1, 6, 12), en appui de guidage/étanchéité (46/47) sur la paroi interne (5) de la pièce intermédiaire (C).

3. Dispositif suivant l'une ou l'autre des revendications précédentes, caractérisé en ce que la pièce d'embouchure (20) vient avec un épaulement annulaire (43) contre le ressaut de commande (7) d'une manière étanche.

4. Dispositif suivant une ou plusieurs des revendications précédentes, caractérisé en ce que l'unité de distribution (dispositif de mise en portions de liquide A) prend par un capuchon extérieur (35) par-dessus un collet d'extrémité (16) de la pièce intermédiaire (C).

5. Dispositif suivant une ou plusieurs des revendications précédentes, caractérisé par un encliquetage de la position de prise (figures 1, 12).

6. Dispositif suivant une ou plusieurs des revendications précédentes, caractérisé en ce que les moyens d'encliquetage (16'/38) sont façonnés dans un ruban attestant l'origine (42).

7. Dispositif suivant une ou plusieurs des revendications précédentes, caractérisé en ce qu'un clapet (clapet 10 ou bille 10') est adjoint à l'embouchure (20'), située coaxialement en dessous de la pièce d'embouchure (20), du canal d'aspiration (21) de la pièce intermédiaire (C).

8. Dispositif suivant une ou plusieurs des revendications précédentes, caractérisé en ce que le piston (24) agencé d'une pièce du point de vue matière à l'extrémité de la pièce d'embouchure tubulaire (20) est pincé au manche d'actionnement (27).

9. Dispositif suivant une ou plusieurs des revendications précédentes, caractérisé en ce que le manche d'actionnement (27) est guidé par un collet annulaire (29) sur la paroi interne du pot intérieur (23).

10. Dispositif suivant une ou plusieurs des revendications précédentes, caractérisé par une ouverture de trop-plein (34) agencée dans la zone du piston (24) entre la chambre cylindrique formée par le pot intérieur (23) (chambre de mise en portion 22) du tube (20) de la pièce d'embouchure.

11. Dispositif suivant une ou plusieurs des revendications précédentes, caractérisé par un indicateur de niveau de remplissage (51) qui peut être lu par la position en hauteur du manche d'actionnement (27).

12. Dispositif suivant une ou plusieurs des revendications précédentes, caractérisé en ce qu'en dessous du piston (24) font saillie des butées de limitation de course (57) qui, en avant du piston (24), s'appliquent sur un fond transversal (26) de la chambre de mise en portion (22).

13. Dispositif suivant une ou plusieurs des revendications précédentes, caractérisé en ce que le fond transversal (26) est façonné sous la forme d'une pièce (61) qui est pincée sur le bord inférieur (23') du pot intérieur (23).

14. Dispositif suivant une ou plusieurs des revendications précédentes, caractérisé en ce que le piston (24) se trouve à l'extrémité, tournée vers la chambre de mise en portion (22), d'une paroi annulaire (59) du manche d'actionnement (27).

15. Dispositif suivant une ou plusieurs des revendications précédentes, caractérisé en ce que le canal d'aspiration (21) ou respectivement la pièce d'embouchure (20) est pincée sous la forme d'une pièce tubulaire (60) dans la zone interne de la paroi annulaire libre (59).

16. Dispositif suivant une ou plusieurs des revendications précédentes, caractérisé en ce que la pièce intermédiaire (C) comporte, pour obtenir un positionnement du dispositif en saillie au-delà du bord du récipient, une paroi annulaire (68) qui est agencée sur une pièce de base (67) reposant à la manière d'un étrier sur le col du récipient (1).

17. Dispositif suivant une ou plusieurs des revendications précédentes, caractérisé en ce que le capuchon extérieur (35) et le collet d'extrémité (16) peuvent coulisser l'un par rapport à l'autre dans une position de prise d'entraînement à la manière de cliquets.
